# EUROPÄISCHE PATENTSCHRIFT

(11) **EP 1 416 259 B1**
(45) Veröffentlichungstag und Bekanntmachung des Hinweises auf die Patenterteilung: **22.08.2007**
(21) Anmeldenummer: 03024850.4
(22) Anmeldetag: 31.10.2003
(51) Int. Cl.: G01M 5/00

(54) **Verfahren zum Prüfen der Stabilität eines Mastes und Vorrichtung zum Durchführen des Verfahrens**
Procedure and device for testing the stability of a pole
Procédé et dispositif d'essai de stabilité d'un poteau

(30) Priorität: 02.11.2002 DE 10251129
(43) Veröffentlichungstag der Anmeldung: 06.05.2004
(73) Patentinhaber: Reiners, Christa, 41812 Erkelenz (DE)
(72) Erfinder: Reiners, Christa, 41812 Erkelenz (DE)
(74) Vertreter: von Creytz, Dietrich

(56) Entgegenhaltungen:
- DE-A1- 10 008 202
- DE-C1- 19 540 319
- DE-U1- 29 910 833

## Beschreibung

Die Erfindung betrifft ein Verfahren zum Prüfen der Stabilität eines im Boden verankerten Mastes unter Einsatz einer von einem in sich mechanisch steifen Rahmengestell aus am Mast angreifenden Krafteinheit, wobei das bei der Prüfung insgesamt gegenüber dem Boden bewegliche Rahmengestell durch ein Zugmittel mit Hilfe eines im Wesentlichen undehnbaren Gurts am Mastfuß festgezurrt wird. Sie betrifft ferner eine Vorrichtung zum Durchführen des Verfahrens.

Der Begriff "Stabilität" umfaßt im vorliegenden Zusammenhang auch den Bedeutungsinhalt von "Standfestigkeit" eines Mastes. Zu den Masten, zum Beispiel aus Metall, Beton, Holz und Kunststoff, wie GFK (glasfaserverstärkte Kunststoffe), der zu prüfenden Art gehören Träger von Verkehrsschildern, Ampeln, Leuchten, Freileitungen und dergleichen. Das wichtigste Anwendungsgebiet sind die relativ hohen Lampenmasten an Straßen oder Plätzen. Die aus Metall bestehenden Masten korrodieren im Allgemeinen erst im Bodenbereich in der Nähe der Erdoberkante (= Grenze Luft/Boden). Durch die Prüfung der Stabilität sollen beispielsweise diejenigen Masten herausgefunden werden, bei denen die Gefahr besteht, daß sie, beispielsweise bei einem schweren Sturm, umknicken.

Ein Meßverfahren zum Prüfen der Stand- und Biegefestigkeit eines Mastes wird beschrieben in EP 0 638 794 B1. Im Bekannten wird die Biegelast (durch Zug und/oder Druck) mit Hilfe eines Baggerauslegers in den Mast eingeleitet und mit einem Drucksensor gemessen. Die dadurch resultierende Auslenkung bzw. der Bewegungsverlauf des Mastes unter Belastung wird mit Hilfe eines neben dem Mast stehenden Wegsensors erfaßt. Bei der praktischen Ausführung werden die Meßergebnisse von Druck- und Wegsensor zeitgleich aufgezeichnet. In der Regel ist es erforderlich, den Mast in zwei schräg (bis zu 90°) gegeneinander versetzten Richtungen zu belasten, um Unsymmetrien der Maststabilität erfassen zu können. Die bekannte Mastprüfung erfordert also mehrere nacheinander folgende Belastungen jeweils mit Verlagerung der Mittel zum Ausüben (und Messen) der Biegelast sowie der Mittel zum Erfassen der Auslenkung. Trotzdem kann am Ende nicht gesagt werden, ob die jeweilig ermittelte Mastauslenkung von einem Fehler des Mastes selbst oder von einer Bewegung des Mastes im - unvorhersehbar nachgiebigen oder unnachgiebigen - Fundament herrührt bzw. welcher Anteil der Mastauslenkung auf das Fundament und welcher Anteil auf den oberirdischen Teil des Mastes zurückzuführen ist.

Ein Prüfverfahren eingangs genannter Art wird beschrieben in DE 195 40 319 C1. Um das Meßergebnis der durch die Wirkung der Krafteinheit verursachten Gesamt-Auslenkung des Mastes nicht durch eine Bewegung des unterirdischen Mastteils im Boden zu verfälschen, wird dem Mastfuß unmittelbar am Boden ein zusätzlicher Wegsensor zum Erfassen der Position dieses Mastteils zugeordnet. Das Meßergebnis des zusätzlichen Wegsensors wird bei der Bewertung der Gesamt-Mastauslenkung berücksichtigt. Zusätzliche Meßgeräte sowie deren Aufstellung und Justierung bereiten zusätzliche Kosten.

Nach DE 100 08 202.5 A1 werden an einem Mast mindestens zwei Meßstellen übereinander vorgesehen und die Meßergebnisse aus den verschiedenen Höhenlagen während der auf die jeweilige Druckausstiegsphase folgenden Erholungsphase auf einem einzigen Empfänger für den unmittelbaren Vergleich vereinigt. Die Meßstellen können mit Lichtsendern und Lichtempfängern ausgestattet werden, so daß sie es ermöglichen, die durch eine Biegelast verursachte Bewegung bzw. Auslenkung einer am Mast vorgesehenen Meßposition in drei Dimensionen zu registrieren. Anstelle der optischen Meßsysteme können auch elektrische Sensoren, z.B. Potentiometer, magnetische Sensoren, z.B. Induktivitäten, oder mechanische Sensoren, z.B. mit Stahlfedern, eingesetzt werden. Zum Registrieren der einzelnen Positionen des Mastes können auch Satelliten-Navigationsempfänger eingesetzt werden. Aufgezeichnet werden kann in irgendeinem Koordinatensystem z.B. im Gauß-Krüger- oder im UTM-System. Die jeweils zu erfassende Wegstrecke kann als Koordinatenänderung unter Biegelast (bzw. Wechsellast) registriert werden.

Schließlich kann nach DE 101 18 083 A1 der den bei der Prüfung der Stand- und Biegefestigkeit auf den Mast und dessen Verankerung auszuübende (Belastungs-) Streß und/oder die Prüfzeit gegenüber dem Stand der Technik vermindert und die für die Lieferung aussagekräftiger Daten zu Stand- bzw. Biegefestigkeit eines Mastes insgesamt erforderliche Prüflast bzw. die für die Prüfung erforderliche Zeit auf ein Minimum beschränkt werden, wenn die durch die Biegelast verursachte Mastauslenkung nach Betrag und gegebenenfalls Richtung in der Nähe der Erdoberkante (= Grenze Boden/Luft am Mast) und mit größerem Abstand von der Erdoberkante gemessen wird und daß die so erfaßten Meßergebnisse zeitgleich Punkt-für-Punkt in einem gemeinsamen Diagramm zusammengefaßt werden. Dadurch wird erreicht, daß zum Prüfen eines einzelnen Mastes nur noch eine in einer einzigen Richtung wirkende Biegelast erforderlich ist, um aussagekräftige Daten über die Stabilität des Mastes und dessen Verankerung zu liefern. Das bekannte Verfahren erfordert aber einen hohen Meßaufzeichnungsaufwand und viel Arbeitszeit.

Der Ausdruck "in der Nähe" Erdoberkante bedeutet im vorliegenden Zusammenhang einen Abstand vom Boden in der Größenordnung bis zu einigen Handbreiten. Alternativ kann man auch von einer Messung mit deutlichem Abstand unterhalb einer eventuell im Mast vorgesehenen Revisionstür sprechen. Die Messung "mit größerem Abstand" über der Erdoberkante bedeutet im Rahmen der Erfindung eine Messung deutlich oberhalb einer eventuell vorhandenen Revisionstür des Mastes, d.h. größenordnungsmäßig bis zu Mannshöhe. Die Meßstelle soll so hoch angeordnet werden, daß der Mastbereich, in dem in der Hauptsache Schäden oberhalb der Erdoberkante auftreten, unter der Meßposition liegt. Es wird daher abkürzend von einer oberen und unteren Meßstelle bzw. von einer oberen und unteren Messung gesprochen, wenn erfindungsgemäß von der Messung "mit größerem Abstand" von bzw. "in der Nähe" der Erdoberkante die Rede ist.

Der Erfindung liegt die praktische Erfahrung zugrunde, daß die meisten Masten die Stabilitätsanforderungen sicher erfüllen und wenige Masten eindeutig instabil sind und repariert bzw. ausgetauscht werden müssen. Es wird also nur selten ein Mast angetroffen, bei dem die beschriebene genaue Messung wirklich erforderlich ist, um zu entscheiden, ob der jeweilige Mast zu den noch stabilen oder schon auszutauschenden bzw. zu reparierenden Exemplaren gehört. Beispielsweise bei Lampenmasten müssen nur größenordnungsmäßig 5 bis 10 % der Masten der genaueren Prüfung unterzogen werden.

Der Erfindung liegt die Aufgabe zugrunde, ein technisch vereinfachtes und zeitlich abgekürztes Verfahren zu schaffen, mit dessen Hilfe herauszufinden ist, bei welchen Masten die genaue Messung sinnvoll ist.

Die erfindungsgemäße Lösung wird im Anspruch 1 angegeben. Für das eingangs genannte Verfahren besteht die Lösung vorzugsweise darin, daß der Gurt nach dem Festzurren (räumlich gesehen) zwischen Mast und Zugmittel am Rahmengestell festgeklemmt bzw. arretiert wird. Ein in sich unnachgiebiger Gurt schließt dann eine gegenseitige Bewegung von Rahmengestell und Mastfuß aus. Eine eventuelle Nachgiebigkeit des Zugmittels, z.B. Hydraulikzylinders, kann sich nicht mehr auswirken. Mit anderen Worten: Durch die Erfindung werden Fixiermittel geschaffen, mit deren Hilfe es möglich ist, die festgezurrte Position zwischen Rahmengestell und Mastfuß für die Zeit der nachfolgenden Messung zu stabilisieren. Zu bedenken ist dabei, daß bei der Messung erhebliche Kräfte - im Allgemeinen in der Größenordnung von 1 t und mehr - vom Rahmengestell aus auf den Mast ausgeübt werden können sollen. Einige Verbesserungen und weitere Ausgestaltungen der Erfindung werden in den Unteransprüchen beschrieben.

Zum Festzurren des Gurts kann beispielsweise ein Hydraulikzylinder am Rahmengestell vorgesehen werden. Wenn der Gurt während der Zeit, in der die eingangs genannte Krafteinheit gegen den Mast, im Allgemeinen in einer Höhe von ein bis drei Metern, drückt, nicht am Rahmengestell festgeklemmt ist, kann das Zugmittel um einen gewissen - wenn auch kleinen - Betrag nachgeben und damit das durch Messen des durch die Krafteinheit auf den Mast ausgeübten Drucks oder der durch den Druck veranlaßten Auslenkung des Mastes aus seiner Ursprungsposition verfälschen. Aus diesem Grunde wurden im Stand der Technik gleichzeitig Messungen an verschiedenen Punkten des Mastes vorgenommen.

Bei Anwendung der Erfindung kann sich jedoch der Mastfuß nicht relativ zum Rahmengestell bewegen, er wird daher zu einem neutralen Null-Punkt, der auch als Dreh- bzw. Schwenkmittelpunkt oder Referenzstelle der Mastauslenkung zu bezeichnen ist, unabhängig davon, wie oder in welcher Weise der den Mastfuß umgebende Boden nachgiebig oder unnachgiebig sein sollte. Durch das erfindungsgemäße mechanische Sperren bzw. Festklemmen des Gurts wird ein echter Nullpunkt wie bei einem Laborversuch, mit räumlich völlig unbeweglich eingeklemmtem Mastfuß erhalten. Ein eventuelles Gründungsspiel im Boden geht also bei der Messung der Mastauslenkung oder des ausgeübten Drucks nicht als Meßfehler ein und braucht auch nicht aufgezeichnet zu werden.

Wenn bei Anwendung der Erfindung der durch die Krafteinheit ausgeübte Druck bzw. das Maß (die Wegstrecke) der durch die Krafteinheit verursachten Mastbiegung gemessen werden, ergeben sich also ein Verlauf von Druck oder Biegung ohne einen durch eine Bewegung des Mastes im Boden begründeten Meßfehler. Die mit Abstand oberhalb des Bodens gemessenen Verläufe von Druck und Biegung können also, so wie sie sind, ohne Berücksichtigung einer gesonderten gemessenen Bodenbewegung, ausgewertet werden. Die nach dem Stand der Technik nur durch Kompensation von mindestens zwei Messungen erhaltenen Netto-Werte lassen sich bei Anwendung der Erfindung unmittelbar durch eine einzige Messung erhalten.

Erfindungsgemäß wird die Wirkung der ein Biegemoment auf den Mast ausübenden Krafteinheit nur noch mit Abstand oberhalb des Bodens, vorzugsweise oberhalb eines im Mast vorgesehenen Revisionsfensters, gemessen. Eine Erfassung der Position des Mastfußes, auch wenn dieser sich während der Messung räumlich bewegen sollte, ist dagegen nicht erforderlich, da bei Anwendung der Erfindung der unbeweglich am Rahmengestell festgelegte Mastfuß einen Bezugs- bzw. Nullpunkt der Messung darstellt.

Die Wirkung der mit Abstand oberhalb des Bodens am Mast angreifenden und ein Biegemoment auf den Mast ausübendenden Krafteinheit wird im Rahmen der Erfindung vorzugsweise dadurch gemessen, daß nur der zeitliche Verlauf des auf den Mast ausgeübten Drucks bzw. Druckanstiegs erfaßt wird. Alternativ ist es auch günstig, nur den zeitlichen Verlauf der durch den Anstieg des Biegemoments bewirkten Mastauslenkung zu messen. Durch die Beobachtung des zeitlichen Verlaufs der Belastung wird die Möglichkeit geschaffen, den Kraftanstieg zu stoppen, wenn der Mast droht umzubrechen. Diese Gefahr läßt sich gegebenenfalls beispielsweise daran erkennen, daß sich die gemessenen Werte von Druck und/oder Auslenkung nicht (mehr) proportional zur einwirkenden Kraft ändern. Hierbei ist es gleichgültig, ob die jeweilige Kraft kontinuierlich oder diskontinuierlich ansteigt bzw. abfällt.

Nur diese jeweils eine Messung mit Abstand oberhalb des Bodens ist also bei Anwendung des erfindungsgemäßen Verfahrens erforderlich. Zum Messen sind dabei der ausgeübte Druck und/oder die durch den Druck bewirkte Auslenkung (mit Abstand oberhalb des Bodens). Schon aus dem zeitlichen Verlauf der auf diese Weise ermittelten Werte von Druck bzw. Auslenkung lassen sich - ohne die eingangs genannten zusätzlichen Messungen - sichere Voraussagen über die Stabilität des Mastes machen. Mit anderen Worten: Um das Meßverfahren gegenüber dem Stand der Technik zu vereinfachen und diejenigen Masten durch eine Vorprüfung auszuwählen, bei denen eine genauere Untersuchung erforderlich ist, soll zunächst allein der Wert oder der zeitliche Verlauf des auf den einzelnen Mast ausgeübten Drucks bzw. des Wegs der Mastauslenkung gemessen werden. Aufgrund dieser Messung wird entschieden, ob eine genauere Untersuchung sinnvoll ist.

Eine Vorrichtung zum Durchführen des erfindungsgemäßen Verfahrens betrifft ein Fixiermittel zum Arretieren des festgezurrten Gurts relativ zum Rahmengestell, welche (sogar bei eventueller Entlastung des Zugmittels) eine Relativbewegung von Mastfuß und Rahmengestell auch dann ausschließt, wenn vom Rahmengestell aus - mit dem jeweiligen oben definierten Abstand oberhalb des Mastfußes - ein Biegemoment mit Kräften von über 1 t in den Mast eingeleitet wird. Im übrigen werden zum Durchführen des erfindungsgemäßen Verfahrens außer der Krafteinheit, mit deren Hilfe - wie nach dem Stand der Technik - ein Biegemoment auf den Mast auszuüben ist, lediglich ein Weg- und/oder Druckmeßsensor bevorzugt, mit deren Hilfe der zeitliche Verlauf der von der Krafteinheit bewirkten Mastauslenkung bzw. des ausgeübten Drucks bestimmt wird. Bei Anwendung ergibt sich folgende Unterscheidung:
A) Normalfall
   Wenn der bei ansteigendem Biegemoment auf den Mast ausgeübte Druck und/oder die entsprechende Auslenkung proportional zunehmen und sich an diesem Meßverlauf bis zu einem vorgegebenen maximalen Biegemoment nichts ändert, kann mit Sicherheit davon ausgegangen werden, daß der Mast die Stabilitätsanforderungen erfüllt. Um diese Aussage machen zu können, braucht nur der zeitliche Verlauf des Drucks oder der Auslenkung gemessen bzw. aufgezeichnet zu werden.
B) Eindeutig defekter Mast
   Eine ähnlich sichere Aussage läßt sich machen, wenn der auf den Mast bei steigender Kraft bzw. bei steigendem Biegemoment ausgeübte Druck eventuell nach anfänglichem Anstieg - konstant bleibt oder sogar abfällt bzw. die Auslenkung stärker als proportional ansteigt. In diesen Fällen kann mit Sicherheit gesagt werden, daß der fragliche Mast die vorgeschriebenen Stabilitätsanforderungen nicht erfüllt. Selbstverständlich erübrigt sich auch dann jede weitere Messung.
C) Unklarer Druckanstieg (weder Fall A noch Fall B)
   Wenn dagegen der zeitliche Verlauf des auf den Mast ausgeübten Drucks bzw. des Wegs der entsprechenden Mastauslenkung als Antwort auf das Biegemoment weder eindeutig steigt noch eindeutig fällt - es gibt sogar Masten, bei denen der Druck in ein oder mehreren Wellen ansteigt - muß die genaue Nachmessung eingeleitet werden, um zu entscheiden, ob der Mast noch akzeptabel ist oder nicht. In einem solchen relativ seltenen Fall rechtfertigt sich der Aufwand der gleichzeitigen Messung an zwei oder mehr Stellen des Mastes. Ein entscheidender Vorteil der Erfindung besteht also daraus, daß sie es erlaubt, die vorgenannten Fälle A und B herauszufinden, bevor die genauere Messung im seltenen Fall C ausgeführt wird. Hierfür bieten sich herkömmliche Meßverfahren an, insbesondere werden die eingangs zitierten Methoden gemäß DE 100 08 202 A1 und DE 101 18 038 A1 bevorzugt.

Das erfindungsgemäße Verfahren, also das messende Erfassen allein des zeitlichen Verlaufs des Anstiegs von Druck und/oder Weg soll möglichst wenig geräte- und arbeitsaufwendig für die Bedienung sowie möglichst streßfrei für den Mast durchgeführt werden. Gemäß weiterer Erfindung werden hierzu kombinierte Meßverfahren, sogenannte Tandem-Meßverfahren, bevorzugt, die es erlauben, zwei oder mehr Komponenten des zu messenden Verlaufs zugleich aufzunehmen oder kombiniert mindestens zwei Vorgänge in den Mast einzuleiten und den daraus resultierenden Verlauf des Drucks oder der Auslenkung zu erfassen.

Im ersteren Fall wird der Verlauf des Anstiegs von Druck und/oder Auslenkung bevorzugt in zwei zueinander senkrecht, horizontalen Komponenten zugleich gemessen, so daß sich die Maststabilität mit einer einzigen Meßreihe erfassen läßt. Beispielsweise werden der Verlauf des Druckanstiegs in Richtung des jeweils wirkenden Biegemoments (entsprechend einer Mastauslenkung) und zugleich der Druckverlauf horizontal quer dazu (entsprechend einer Masttorsion) gemessen.

Im anderen Fall werden der Druck und/oder die Auslenkung pumpend, das heißt durch einzelne gleiche, relativ kleine Kraftschübe, bevorzugt mit konstanter Frequenz, beispielsweise in hundert Schüben von größenordnungsmäßig 10 kg pro Minute, erhöht. Der geringe Anstieg des Drucks von Schub zu Schub läßt rechtzeitig erkennen, wenn der Mast droht umzuknicken. Als Folge des beschriebenen Druck-Taktes führt der Mast eine zeitliche Sägezahnbewegung durch: Auf eine schnelle Vorbewegung folgt jeweils eine kurze Pause (eventuell mit kleinerer Rückbewegung) und darauf wieder eine schnelle Vorbewegung usw. Durch gleichzeitige erfindungsgemäße Messung wird dann - bei einem intakten Mast - ein ebenso sägezahnförmiger Anstieg von Druck bzw. Auslenkung erwartet. Wenn der gemessene Wert im Verlauf des Pump-Vorgangs von Pumpen-Hub zu Pumpen-Hub gleichförmig zunimmt, kann bereits vor Erreichen einer vorgesehenen maximalen Last, also schon nach relativ kurzer Arbeitszeit und relativ geringer Mastbelastung, gesagt werden, der Mast sei in Ordnung. Wenn dagegen der auf den Mast ausgeübte Druck - trotz gleichförmig stufenweise ansteigendem Biegemoment - sich ungleichförmig oder gar nicht ändert, wird eine genaue Nachmessung erforderlich. Auch einen defekten Mast kann man auf diese Weise nach kurzer Meßzeit herausfinden, wenn nämlich beispielsweise ein pumpender Anstieg des Biegemoments nicht mit einem proportionalen Anstieg des Meßwerts beantwortet wird.

Die Messung von Druck und/oder Auslenkung selbst erfolgt erfindungsgemäß entweder unmittelbar mit Hilfe von zum Erfassen des zeitlichen Druck- oder Wegverlaufs geeigneten Meßgeräten oder mittelbar, zum Beispiel mit Hilfe einer Meßeinheit aus Lichtquelle und Lichtempfänger, welche mit einer auf einen ortsfesten Lichtempfänger gerichteten Lichtquelle verbunden ist und mit deren Hilfe der Meßwertverlauf - bei der eventuellen Nachmessung sogar in verschiedenen Höhen des Mastes zugleich - verstellbar ist. Gegebenenfalls kann die Lichtquelle bzw. deren Lichtstrahl durch das Meßgerät abhängig vom erfaßten Meßwert gesteuert werden. Hierbei bilden die Lichtquelle bzw. deren Lichtstrahl gewissermaßen einen Zeiger, der auf den Lichtempfänger gerichtet ist und dort wie auf einer Skala einen Weg- oder Druckwert anzeigt.

Als Lichtempfänger kann ein Schirm, vorzugsweise ausgebildet als durchscheinende Mattscheibe, vorgesehen werden, welcher Mittel zum Erfassen der Position des von der Lichtquelle ausgehenden Lichtstrahl zugeordnet sind. Der Mattscheibe kann auch rückseitig - auf der von der Lichtquelle abgewandten Seite - ein Mittel zum optischen Erfassen eines durch einen Lichtstrahl erzeugten Lichtflecks zugeordnet werden. Ein solches Mittel zum Erfassen von Lichtflecken ist eine Meßkamera, insbesondere CCD-Kamera, vorzugsweise mit nachgeschaltetem Rechner. Auf diese Weise lassen sich Meßergebnisse sogar on-line aufzeichnen bzw. auf einem Bildschirm wiedergeben. Die jeweiligen optischen Mittel zum Erfassen des Verlaufs des Anstiegs von Druck bzw. Auslenkung können beispielsweise mit einem Druck- oder Wegmeßgerät kombiniert werden, das die Optik, zum Beispiel die Richtung eines Lichtstrahls oder von dessen Fokus, weg- oder druckabhängig, das heißt abhängig von der Mastauslenkung oder vom auf den Mast ausgeübten Druck, steuert.

Die Prüfung des Verlaufs von Druck und/oder Auslenkung als Antwort auf die Anstiegs- und Erholungsphase des Biegemoments - kurz: Feinstruktur des Druck- oder Wegverlaufs - während einer pumpenden Erhöhung des Biegemoments (mit Abbruch vor Erreichen des Maximalwerts) hat also in jedem Fall auch eine Abkürzung des Meßverfahrens - sprich: der Arbeitszeit - sowie eine Verminderung des auf den Mast ausgeübten Stresses zur Folge. Die Pump-Messung mit Ermittlung der Feinstruktur des Meßwertverlaufs werden daher im Rahmen der Erfindung zum Durchführen des Verfahrens bevorzugt.

Gemäß weiterer Erfindung können der fragliche Druck bzw. die dadurch bewirkte Auslenkung nach Betrag und gegebenenfalls Richtung - bei einer Nachmessung vorzugsweise in der Nähe der Erdoberkante und/oder in größerem Abstand von der Erdoberkante - gemessen werden. Die so erfaßten Meßergebnisse sollen dann zeitgleich Punkt-für-Punkt in einem gemeinsamen Diagramm zusammengefaßt werden. Das gilt insbesondere auch für den Fall, daß das von der Krafteinheit bewirkte Biegemoment pumpend mit jeweils auf eine Druckanstiegsphase folgende Erholungsphase erhöht und der dadurch verursachte Druckanstieg bzw. Wegeverlauf gemessen wird.

Das Prinzip der Erfindung läßt sich auch folgendermaßen beschreiben: Um ein Verfahren zum Prüfen der Stabilität eines am Mastfuß im Boden verankerten Mastes gegenüber dem Stand der Technik zu vereinfachen, wird der Mastfuß an einem in sich steifen Rahmengestell unbeweglich fixiert und vom Rahmengestell aus ein Biegemoment (mit Abstand über dem Boden) in den Mast eingeleitet. Der Verlauf des auf den Mast ausgeübten Drucks und/oder der durch das Biegemoment bewirkten Mastauslenkung werden gemessen.

Anhand der schematischen Darstellung eines Ausführungsbeispiels werden Einzelheiten der Erfindung erläutert. Es zeigen:
- **Fig. 1**: eine Meßanordnung,
- **Fig. 2**: eine abgewandelte Meßanordnung; und
- **Fig. 3**: Kurven mit dem zeitlichen Verlauf des Drucks.

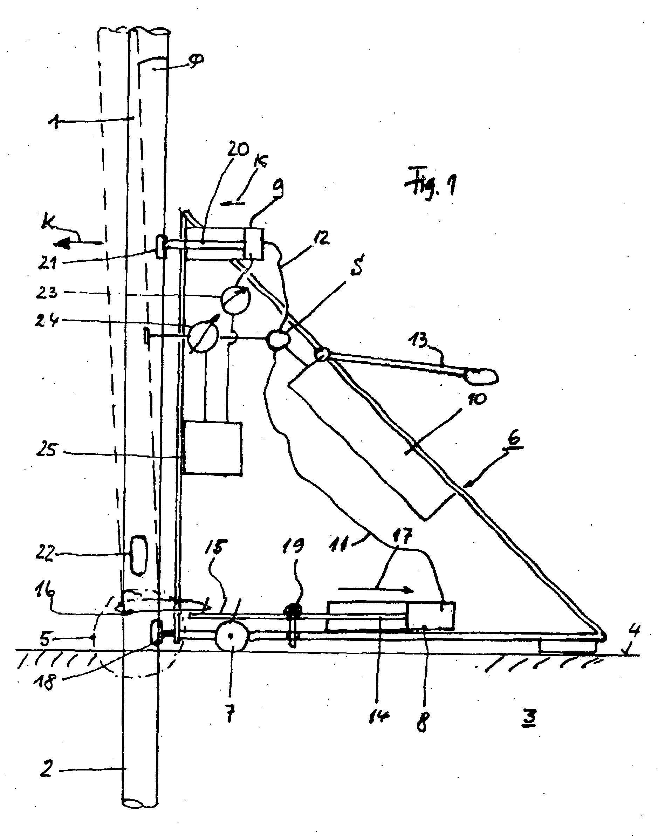

Fig. 1 zeigt ein Prinzipbild eines insgesamt mit 1 bezeichneten Mastes, der mit seinem unterirdischen Bodenteil 2 im Boden 3 verankert ist. Der an die Erdoberkante 4 angrenzende Teil des Mastes wird als Mastfuß 5 bezeichnet. Neben dem Mast 1 zeigt Fig. 1 ein insgesamt mit 6 bezeichnetes Rahmengestell. Das Rahmengestell 6 steht lose, zum Beispiel auf Kufen oder Rädern 7, auf dem Boden 3. Es kann auf den Rädern 7 fahrbar sein. Das Rahmengestell 6 soll in sich mechanisch steif bzw. unnachgiebig sein. Es besitzt einen Zugzylinder 8 und einen Druckzylinder 9, die mit einer Pumpe 10 über Leitungen 11, 12 - mit umschaltbarer Schnittstelle S - beaufschlagbar sind. Die Pumpe 10 kann motorisch oder mit Handhebel 13 zu betätigen sein. Der Kolben 14 des Zugzylinders 8 besitzt mindestens einen Haken 15, auf den ein Gurt 16, der, beispielsweise wie ein Ring, um den Mast 1 gelegt wird, aufzuhängen ist.

Bei Betrieb wird der Kolben 14 des Zugzylinders 8 in Pfeilrichtung 17 (weg vom Mast) bewegt, bis der Gurt 16 straff gespannt ist und das Rahmengestell 6, zum Beispiel mit einem Anschlag 18, fest an den Mast 1 gedrückt wird. Wenn die gewünschte Spannung des Gurts 16 erreicht ist, wird der Gurt bzw. Kolben 14 mit einer Sperre 19 am Rahmengestell 6 arretiert. Gegenseitige Bewegungen von Rahmengestell 6 und Mast 1 sind dann nicht mehr möglich, vorausgesetzt, der Gurt 16 ist unnachgiebig. Wenn im Zusammenhang mit der Erfindung gesagt wird, der Gurt 16 werde am Rahmengestell 6 arretiert bzw. festgeklemmt usw., ist damit sowohl ein unmittelbares als auch ein mittelbares Fixieren des Gurts 16 am Rahmengestell 6 und damit des letzteren am Mast 1 gemeint. Das Arretieren oder Festklemmen des Gurts 16 kann unmittelbar durch Fixieren am Rahmengestell 6 oder mittelbar beispielsweise durch Fixieren bzw. Sperren des Zugmittels (zum Beispiel des Kolbens 14) erfolgen.

Wenn der Gurt 16 in der beschriebenen Weise gespannt fixiert ist, wird der Druckzylinder 9, vorzugsweise über dieselbe Pumpe 10 wie der Zugzylinder 8, durch Umschaltung an der Schnittstelle S aktiviert. Der Druckzylinder drückt mit seinem Kolben 20 bzw. mit dem am freien Ende des Kolbens 20 befindlichen Anschlag 21 mit ansteigender Kraft, zum Beispiel bis zu 1,5 t, gegen den Mast 1. Die Andrückstelle soll mit Abstand, zum Beispiel in Höhe von ein bis drei Metern, über dem Boden 3, vorzugsweise aber mit Abstand oberhalb eines Revisionsfensters 22 oder einer (nicht gezeichneten) Kröpfung des Mastes 1 vorgesehen werden. Gerade an einem Revisionsfenster und/oder an einer Kröpfung ist ein Mast oft bruchgefährdet. Der Kolben 20 soll mit einer Kraft K - wie gezeichnet - in Pfeilrichtung gegen den Mast 1 drücken und dadurch das Biegemoment auf den Mast ausüben.

Das beschriebene Rahmengestell 6 kann in beliebiger Weise ausgebildet werden, es soll jedoch in sich so mechanisch steif sein, daß sich der Druckzylinder 9 über das Gestell 6 am Boden 3 und letztlich auch an dem in der Nähe des Mastfußes 5 befindlichen Anschlag 18 abstützen kann. Der Anschlag 18 soll wie ein Widerlager der Kraft K, das heißt des auf den Mast 1 ausgeübten Biegemoments, wirken.

Wenn der Druckzylinder 9 mit seinem Anschlag 21 mit ansteigender Kraft gegen den Mast 1 drückt, wird dieser in Richtung der fraglichen Kraft K gebogen. Dreh-oder Nullpunkt bzw. Schwenkachse dieser Biegung ist der Bereich des Mastfußes 5 an der Erdoberkante 4, nämlich dort, wo der Gurt 16, fixiert durch die Sperre 19, um den Mast 1 gelegt ist. Obwohl das Rahmengestell 6 weder relativ zum Boden 3 gebremst noch am Boden fixiert wird, spielen bei Ausführung des erfindungsgemäßen Verfahrens Bodenbewegungen oder die Bodenfestigkeit, also Bewegungen des Mastfußes 5 relativ zum Boden 3, keine Rolle, weil wegen der Fixierung des Gurts 16 am Gestell 6 eine Relativbewegung von Mast 1 und Gestell 6 nicht möglich ist.

Zur Erläuterung sei darauf hingewiesen, daß nach der oben genannten DE 195 40 319 C1 eine gegenseitige Bewegung von Mast 1 und Rahmengestell 6 in geringem Umfang dadurch möglich war, daß der Zugzylinder 8 als Antwort auf die durch den Druckzylinder 9 ausgeübten Kraft zumindest geringfügig nachgiebig reagierte. Wegen der erfindungsgemäßen Sperre 19 bzw. der Arretierung des Gurtes 16 am Rahmengestell 6 ist jedoch ein solches Nachgeben als Antwort auf die durch den Druckzylinder 9 ausgeübten Kraft nicht mehr möglich.

Im Rahmen des erfindungsgemäßen Verfahrens werden der durch den Druckzylinder 9 auf den Mast 1 ausgeübte Druck mit Hilfe eines Drucksensors 23 oder die durch die mit dem Druckzylinder 6 erzeugte Kraft K verursachte Auslenkung mit Hilfe eines Wegsensors 24 aufgenommen. Vorzugsweise wird mit den Geräten 23 und 24 der zeitliche Verlauf von Druck bzw. Weg gemessen. Das Meßergebnis wird einem Rechner 25 bzw. einem entsprechenden Anzeigegerät zugleitet.

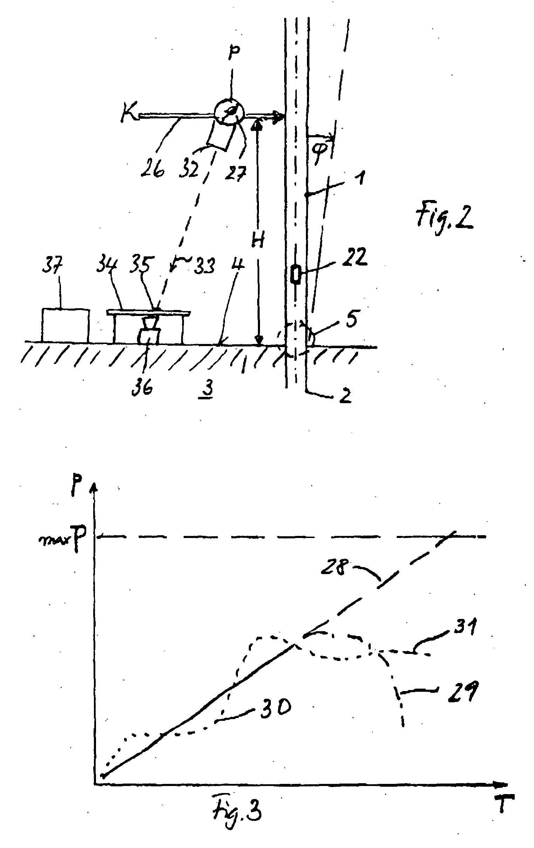

Fig. 2 zeigt ein anderes Prinzipbild einer erfindungsgemäßen Meßanordnung. Auf den Mast 1 wirkt in einer Höhe H, z.B. bei einem Laternenmast in ein bis drei Metern, eine Kraft K die sich auf einem am Mastfuß fixierten Rahmengestell (in Fig. 2 nicht gezeichnet) - zum Beispiel gemäß Fig. 1 - abstützt. Durch die Kraft K wird ein Biegemoment auf den Mast ausgeübt, das den Mast um einen Winkel ϕ seitlich auslenkt. Dem gegen den Mast 1 in Richtung der Kraft K drückenden Kraftarm 26 wird ein Sensor 27 zugeordnet, der den fraglichen Druck oder Weg mißt. Wenn der Sensor 27 als Drucksensor ausgebildet ist, wird mit seiner Hilfe der Druck, den der Mast 1 der Kraft K entgegenstellt, erfaßt. Ist dagegen der Sensor 27 ein Wegsensor, wird die Auslenkung gemessen, die sich als Folge der einwirkenden Kraft K einstellt.

In Fig. 3 wird als Beispiel der Verlauf des Drucks p in Abhängigkeit von der Zeit T dargestellt. Es wird angenommen, daß der Druck p zunächst in Abhängigkeit von der Zeit T linear ansteigt. Wenn dieser Anstieg im gesamten Druckmeßbereich bis zum für die Stabilitätsprüfung vorgeschriebenen maximalen Druck P in etwa linear bleibt (längs des gestrichelt dargestellten Druck/Zeit-Verlaufs 28), kann vorausgesetzt werden, daß der geprüfte Mast 1 die vorgeschriebenen Stabilitätsanforderungen erfüllt. Wenn dagegen der gemessen Druck p vor Erreichen des maximalen Drucks P nicht mehr ansteigt und sogar abfällt (strichpunktierter Druck/Zeitverlauf 29) steht fest, daß der geprüfte Mast die Stabilitätsanforderungen nicht erfüllt. Grundsätzlich Ähnliches gilt für den Weg (bzw. dessen Verlauf) bei der Auslenkung.

Es gibt Masten, bei denen der zeitliche Verlauf des Drucks bzw. Wegs schon am Anfang der Kurve von Fig. 3 keinen echt linearen bzw. proportionalen Verlauf und/oder später - vor Erreichen des maximalen Werts (P) - keinen eindeutigen Abfall zeigt. Beispiele solcher zeitlichen Meßwert-Verläufe werden durch die gepunkteten Linien 30 und 31 symbolisiert. In diesen Fällen kann nach dem erfindungsgemäßen Verfahren ebenfalls eine positive Aussage gemacht werden nämlich, daß der betreffende Mast einer genaueren Untersuchung zu unterziehen ist.

Der Mast 1 nach Fig. 2 besitzt in einer Höhe von größenordnungsmäßig etwa einem Meter über dem Boden 3 ein Revisionsfenster 22. Der Angriff der Kraft K kann oberhalb des Revisionsfensters 22 - wie in Fig. 2 - (grundsätzlich allerdings auch unterhalb des Revisionsfensters 22) erfolgen. Mit dem Sensor 27 steuermäßig gekoppelt werden kann eine Lichtquelle 32, die einen Lichtstrahl 33 in Richtung auf einen Schirm 34 (Mattscheibe) sendet und dort einen Lichtfleck 35 erzeugt. Der Schirm bzw. Lichtempfänger 34 kann als durchscheinende Mattscheibe ausgebildet werden, welcher rückseitig - auf der von der Lichtquelle 32 abgewandten Seite - ein Mittel zum optischen Erfassen des Lichtflecks 35 zugeordnet ist. Ein solches Mittel kann gemäß Fig. 2 eine Meßkamera 36 sein, der vorzugsweise ein Rechner 37 nachgeschaltet wird.

### Bezugszeichenliste:

- 1: = Mast
- 2: = Bodenteil (1)
- 3: = Boden
- 4: = Erdoberkante
- 5: = Mastfuß
- 6: = Rahmengestell
- 7: = Räder
- 8: = Zugzylinder
- 9: = Druckzylinder
- 10: = Pumpe
- 11,12: = Druckleitungen
- 13: = Handhebel
- 14: = Kolben (8)
- 15: = Haken
- 16: = Gurt
- 17: = Pfeilrichtung
- 18: = Anschlag
- 19: = Sperre
- 20: = Kolben (9)
- 21: = Anschlag
- 22: = Revisionsfenster
- 23: = Drucksensor
- 24: = Wegsensor
- 25: = Rechner
- 26: = Kraftarm
- 27: = Sensor
- 28: = Druck/Zeit-Verlauf bei intaktem Mast
- 29: = Druck/Zeitverlauf bei defektem Mast
- 30,31: = Druck/Zeitverläufe bei genauer nachzuprüfenden Masten
- 32: = Lichtquelle
- 33: = Lichtstrahl
- 34: = Schirm
- 35: = Lichtfleck
- 36: = Kamera
- 37: = Rechner
- 38: = Erdoberkante
- 39: = Drucksensor
- 40: = Wegsensor
- 41: = Rechner

## Patentansprüche

1. Verfahren zum Prüfen der Stabilität eines im Boden (3) verankerten Mastes (1) unter Einsatz einer von einem in sich mechanisch steifen Rahmengestell (6) aus am Mast (1) angreifenden Krafteinheit (9), wobei das bei der Prüfung insgesamt gegenüber dem Boden (3) bewegliche Rahmengestell (6) durch ein Zugmittel (8) mit Hilfe eines im Wesentlichen undehnbaren Gurtes (16) am Mastfuß (5) festgezurrt wird, **dadurch gekennzeichnet, daß** der Gurt (16) nach dem Festzurren zwischen Mast (1) und Zugmittel (8) am Rahmengestell (6) arretiert wird.

2. Verfahren nach Anspruch 1, **dadurch gekennzeichnet, daß** nur der zeitliche Verlauf - p (T) - des auf den Mast (1) ausgeübten Drucks (p) gemessen wird.

3. Verfahren nach Anspruch 1, **dadurch gekennzeichnet, daß** nur der zeitliche Verlauf des Wegs der durch die Krafteinheit (9) auf den Mast (1) bewirkten Auslenkung (ϕ) gemessen wird.

4. Verfahren nach einem der Ansprüche 1 bis 3, **dadurch gekennzeichnet, daß** der zeitliche Verlauf des Drucks und/oder Wegs aufgezeichnet und durch Anschauung entschieden wird, ob der einzelne Mast (1) die Stabilitätsanforderungen erfüllt, nicht erfüllt oder ob eine genauere Untersuchung erforderlich ist.

5. Verfahren nach einem der Ansprüche 1 bis 4, **dadurch gekennzeichnet, daß** der durch die Krafteinheit (K) - kontinuierlich oder diskontinuierlich geändert - auf den Mast (1) ausgeübte Druck bzw. die entsprechende Wegauslenkung nach Betrag und gegebenenfalls Richtung gemessen werden und daß die so erfaßten Meßergebnisse zeitgleich Punkt-für-Punkt in einem gemeinsamen Diagramm zusammengefaßt werden.

6. Vorrichtung zum Durchführen des Verfahrens nach einem der Ansprüche 1 bis 5, **dadurch gekennzeichnet, daß** ein Fixiermittel (19) zum Arretieren des festgezurrten Gurts (16) am Rahmengestell (6) vorgesehen ist.

7. Vorrichtung nach Anspruch 6, **dadurch gekennzeichnet, daß** ein Sensor (27) zum Erfassen des zeitlichen Verlaufs von Druck und/oder Weg mit einer auf einen ortsfesten Lichtempfänger (34) gerichteten Lichtquelle (32) verbunden und diese bzw. deren Lichtstrahl (33) durch den Sensor (27) abhängig vom gemessenen Wert gesteuert ist.

8. Vorrichtung nach Anspruch 6 oder 7, **dadurch gekennzeichnet, daß** als Lichtempfänger ein Schirm (34), insbesondere ausgebildet als durchscheinende, Mattscheibe vorgesehen ist, dem Mittel zum Erfassen der Position der von der Lichtquelle (32) ausgehende Lichtstrahl (33) zugeordnet sind.

9. Vorrichtung nach einem der Ansprüche 6 bis 8, **dadurch gekennzeichnet, daß** Lichtempfänger eine, vorzugsweise durchscheinende, Mattscheibe (34) vorgesehen ist, welcher rückseitig - auf der von der Lichtquelle (32) abgewandten Seite - ein Mittel zum optischen Erfassen eines durch einen Lichtstrahl (33) erzeugten Lichtflecks (35) zugeordnet ist.

10. Vorrichtung nach einem der Ansprüche 6 bis 9, **dadurch gekennzeichnet, daß** als Mittel zum Erfassen von auf dem, vorzugsweise als Mattscheibe ausgebildeten, Schirm (13) erzeugten Lichtflecken (14) eine Meßkamera (15), insbesondere CCD-Kamera, vorzugsweise mit nachgeschaltetem Rechner (16), vorgesehen ist.

## Claims

1. Method for testing the stability of a mast (1) anchored to the ground (3) by using a force unit (9) acting on the mast (1) from a mechanically rigid frame (6), wherein the frame (6) which can move as a whole relative to the ground (3) during the test is secured by tightening means (8) by means of a belt (16) which is essentially non-extensible at the foot of the mast (5), **characterised in that** the belt (16) is fixed after securing between the mast (1) and the tightening means (8) on the frame (6).

2. Method according to claim 1, **characterised in that** only the time path - p(T) - of the pressure (p) exerted on the mast (1) is measured.

3. Method according to claim 1, **characterised in that** only the time path of the movement of displacement (ϕ) caused by the force unit (9) on the mast (1) is measured.

4. Method according to one of claims 1 to 3, **characterised in that** the time path of the pressure and/or movement is recorded and a decision is made by observation as to whether the individual mast (1) meets the requirements for stability or whether a more precise examination is necessary.

5. Method according to one of claims 1 to 4, **characterised in that** the pressure exerted by the force unit (K) on the mast (1) - changed continually or discontinually - and the corresponding displacement is measured according to the amount and if necessary direction, and **in that** the thus established measurement results are summarised simultaneously point for point on a common diagram.

6. Device for performing the method according to one of claims 1 to 5, **characterised in that** a fixing means (19) is provided for locking the secured belt (16) onto the frame (6).

7. Device according to claim 6, **characterised in that** a sensor (27) for detecting the time path of pressure and/or movement is connected to a light source (32) directed towards a fixed light receiver (34) and the light source or its light beam (33) is controlled by the sensor (27) depending on the measured value.

8. Device according to claim 6 or 7, **characterised in that** as a light receiver a screen (34) is provided, designed in particular as a translucent matt disc, to which means are allocated for determining the position of the light beam (33) emanating from the light source **(32).**

9. Device according to one of claims 6 to 8, **characterised in that** as a light receiver a preferably translucent matt disc (34) is provided, which on the rear side - on the side facing away from the light source (32) - is allocated means for the optical detection of a light spot (35) generated by a light beam (33).

10. Device according to one of claims 6 to 9, **characterised in that** as means for detecting light spots (14) generated on the screen (13), which is preferably in the form of a matt disc, a measuring camera (15) is provided, in particular a CCD camera, preferably with a computer attached (16).

## Revendications

1. Procédé d'essai de stabilité d'un poteau (1) ancré dans le sol (3), dans lequel il est utilisé un vérin (9) qui, à partir d'un châssis (6) mécaniquement rigide en soi, est appliqué au poteau (1), et dans lequel le châssis (6), globalement mobile par rapport au sol (3) pendant l'essai, est attaché au pied (5) du poteau (1) par le biais d'un mécanisme de traction (8) et au moyen d'une sangle (16) essentiellement inextensible, **caractérisé en ce que** la sangle (16), une fois serrée, est bloquée sur le châssis (6) entre le poteau (1) et le mécanisme de traction (8).

2. Procédé selon la revendication 1, **caractérisé en ce que** seule est mesurée la variation dans le temps - p (T) - de la poussée (p) exercée sur le poteau (1).

3. Procédé selon la revendication 1, **caractérisé en ce que** seule est mesurée la variation dans le temps de la trajectoire du déport (ϕ) provoqué par l'action du vérin (9) sur le poteau (1).

4. Procédé selon l'une quelconque des revendications 1 à 3, **caractérisé en ce que** la variation dans le temps de la poussée et/ou de la trajectoire est enregistrée, et **en ce qu'**une décision est prise, sur la base d'une visualisation des valeurs, quant à savoir si le poteau (1) concerné répond ou ne répond pas aux exigences de stabilité ou si un examen plus approfondi est nécessaire.

5. Procédé selon l'une quelconque des revendications 1 à 4, **caractérisé en ce que** la poussée exercée sur le poteau (1) par le vérin (K) - poussée modifiée de façon continue ou discontinue - ainsi que le déport correspondant sont mesurés pour obtenir leur valeur et, le cas échéant, leur direction, et **en ce que** les résultats enregistrés sont réunis, point par point et simultanément, dans un diagramme commun.

6. Dispositif d'application du procédé selon l'une quelconque des revendications 1 à 5, **caractérisé en ce qu'**un moyen d'arrêt (19) est prévu sur le châssis (6), pour bloquer la sangle (16) lorsque celle-ci est serrée.

7. Dispositif selon la revendication 6, **caractérisé en ce qu'**un capteur (27) destiné à détecter la variation dans le temps de la poussée et/ou de la trajectoire, est connecté à une source de lumière (32) dirigée sur un récepteur de lumière (34) stationnaire, ladite source de lumière, ou plutôt le rayon lumineux (33) de celle-ci, étant commandé par le capteur (27) en fonction de la valeur mesurée.

8. Dispositif selon la revendication 6 ou 7, **caractérisé en ce qu'**il est prévu, en tant que récepteur de lumière, un écran (34), en particulier un écran dépoli translucide, auquel sont affectés des moyens d'enregistrement de la position du rayon lumineux (33) émis par la source de lumière (32).

9. Dispositif selon l'une quelconque des revendications 6 à 8, **caractérisé en ce qu'**il est prévu, en tant que récepteur de lumière, un écran dépoli (34), de préférence translucide, qui comporte à l'arrière - à savoir du côté opposé à la source de lumière (32) - un moyen de détection optique d'un point lumineux (35) généré par un rayon lumineux (33).

10. Dispositif selon l'une quelconque des revendications 6 à 9, **caractérisé en ce qu'**il est prévu, en tant que moyen de détection du point lumineux (35) généré sur l'écran (34) de préférence translucide, une caméra de mesure (36), en particulier une caméra à mémoire CCD, comprenant, de préférence, un calculateur (41) connecté en aval.
